# EUROPEAN PATENT SPECIFICATION

(11) **EP 4 677 319 B1**
(45) Date of publication and mention of the grant of the patent: **18.11.2026**
(21) Application number: 24713540.3
(22) Date of filing: 04.03.2024
(51) Int. Cl.: G01K 1/08, G01K 13/02

(54) **THERMOWELL**
THERMOBEHÄLTER
PUITS THERMOMÉTRIQUE

(30) Priority: 07.03.2023 IT 202300004155
(43) Date of publication of application: 14.01.2026
(73) Proprietor: Thermo Engineering S.r.l., 26030 Malagnino (IT)
(72) Inventor: BOZZETTI, Michele, 26100 Cremona (IT); VACCHELLI, Daniele, 26100 Cremona (IT)
(74) Representative: Mari, Marco Giovanni
(86) International application number: PCT/IT2024/050045
(87) International publication number: WO 2024/184931

(56) References cited:
- DE-A1- 102010 030 075
- JP-A- H1 123 373
- US-A1- 2021 164 842

## Description

### Technical field

The present invention concerns the field of temperature sensors suitable for use in a wide range of industries.

More in detail, the invention relates to a thermowell, particularly suitable for protecting a probe for measuring the temperature when immersed in a process fluid.

### Background art

Thermowells are widely used in the energy, pharmaceutical, food, petrochemical industries, etc.

They are used to protect temperature gauges and sensors from difficult process conditions, such as high pressure, high flow speed and corrosion, when the thermometer cannot be placed directly in the fluid, allowing maintenance or replacement of the sensors without requiring to stop the system.

Thermowells designed for high pressure applications are generally formed from bars, to ensure their integrity.

In general, a thermowell comprises a hollow body, the stem, into which the temperature probe can be inserted, and a specific coupling (flanged, threaded or welded) for connection to the process.

Said hollow body comprises an outer surface, an inner surface, a first closed end and a second end provided with an opening for inserting the probe.

Thermowells are also classified based on the form of the stem. A thermowell with a straight stem has the same diameter for the whole insertion length and protects from corrosion and erosion. Stepped thermowells generally have a diameter of ¾" at the top which decreases to ½" close to the tip, i.e., at the closed end. The smaller surface area allows more uniform speeds and a faster temperature response of detection devices. Tapered, or truncated cone shape, thermowells, have a diameter that decreases gradually along the insertion length. They offer a higher degree of resistance and fast response times to temperature variations. Tapered wells are frequently used in high speed applications.

The inner cavity of the hollow body instead usually has a constant section.

While the inner surface of the hollow body is smooth, the outer surface can advantageously be machined and in particular have crests with a helical pattern.

According to US Patent Application No. 2021/ 164842 A1, a thermowell as described above is disclosed, comprising a hollow body of substantially truncated cone shape having an outer surface, an inner surface, a first closed end and a second end provided with an opening suitable for inserting a thermometric probe, wherein outer surface comprises a rib, or ridge, with a helical pattern.

Advantageously, said helical crests reduce the formation of vortices within the fluid flow, greatly reducing the vibrations and oscillations to which the thermowell, and consequently the probe inside it, are subjected.

Although known thermowells are designed to reduce the vibrations, they still have some limits and drawbacks.

As these types of wells are obtained by machining stainless steel bars, it is clear that the geometry of the outer surface of the hollow body has a significant impact on production economy.

To obtain helical crests, a large amount of material must be removed by milling, with drawbacks both in terms of the strength of the well, which becomes much thinner along its body, and in terms of raw material and machining costs.

### Presentation of the invention

The object of the invention is to overcome these limits, producing a thermowell that is efficient in terms of reducing vortices in the flow, resistant to vibrations and stress, and economical to produce.

These objects are achieved with a thermowell comprising a hollow body of substantially truncated cone shape, tapered, which becomes thinner towards the tip, having an outer surface, an inner surface, a first closed end and a second end provided with an opening suitable for inserting a thermometric probe, characterised in that said outer surface of said hollow body comprises a plurality of annular channels arranged parallel to each other so as to create between them a plurality of transverse ribs, wherein each channel comprises at least one break, and said at least one break of each annular channel is arranged offset from the at least one break of the preceding and following annular channel, so as to leave an area of continuity in the outer surface of the hollow body creating at least rib with a helical pattern.

Advantageously, said channels are formed in the thickness of said hollow body.

Moreover, said channels occupy a portion of said hollow body proximal to said first closed end.

According to aspects of the invention:
- the depth of said channels decreases from said second end provided with an opening to said first closed end, so as to leave an equal amount of material between the bottom of said channel and the inner surface of the hollow body;
- the height of said at least one rib with a helical pattern decreases from said second end provided with an opening to said first closed end.

In a preferred variant of the invention, each channel comprises four breaks, so as to create four areas of continuity in the outer surface of the hollow body, creating four ribs with a helical pattern.

The advantages of the invention are evident and due above all to the geometry of the machining operations performed on the outer surface of the hollow body.

Firstly, the hollow body is provided with two types of ribs: a first plurality of transverse ribs suitable to give greater strength to the hollow body and a second plurality of ribs with a helical pattern, obtained by means of the continuity of the outer surface of the well, suitable to reduce the vortices of the flow in which the well is immersed.

Advantageously, said ribs with a helical pattern are formed indirectly in the thickness of the material of the hollow body of the well, through the succession of breaks offset by channels adjacent to one another.

The removal of material, with respect to the prior art, is greatly reduced and involves only the areas of the channels. The thickness of a large part of the surface of the hollow body of the well remains intact.

Reduced removal of material also translates into lower production costs.

### Brief description of the drawings

These and other advantages will be more apparent hereinafter, from the description of a preferred embodiment of the invention, provided by way of non-limiting example, and with the aid of the figures, wherein:
Fig. 1 represents, in an axonometric view, a thermowell according to the invention;
Fig. 2 represents a detail of Fig. 1;
Figs. 3-4 represent, in a longitudinal section and in a cross-section, respectively, the thermowell of Fig. 1.

### Detailed description of preferred embodiments of the invention

With reference to the figures, there is illustrated a thermowell 1, of the type particularly suitable for protecting a probe for measuring the temperature when immersed in a process fluid.

Said thermowell 1 comprises a hollow body 2 of substantially truncated cone shape, tapered, which becomes thinner towards the tip.

Said hollow body 2 comprises an outer surface 2a, an inner surface 2b, a first closed end 3 that forms said tip, and a second end 4 provided with an opening suitable for inserting the thermometric probe.

Means for coupling to the process pipes, through which the fluid that said probe is to measure the temperature of flows, are provided at said second end 4.

The inner cavity of said hollow body 2 has a cylindrical shape and a constant cross section. The inner surface 2b of said hollow body 2 is smooth.

The outer surface 2a of said hollow body 2 is instead machined, in a succession of crests and troughs that are functional for damping the vibrational excitations and at the same time guarantee greater strength to said well.

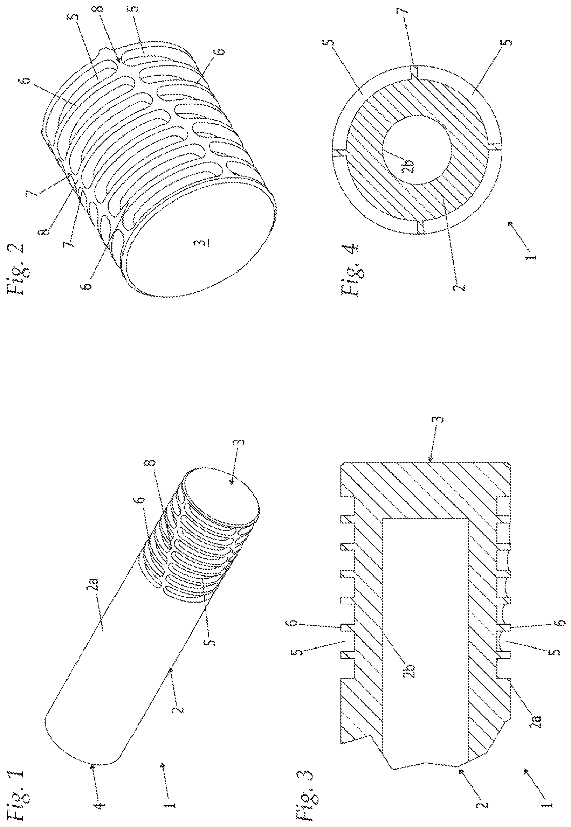

As is apparent from Figs. 1 and 2, said outer surface 2a of said hollow body 2 comprises a plurality of annular channels 5 arranged parallel to each other so as to create between them a plurality of transverse ribs 6.

Said channels 5 do not cover the whole of the outer surface 2a of the hollow body 2 but occupy a portion of said hollow body 2 proximal to said first closed end 3.

As is apparent from the section of Fig. 3, said channels 5 are formed in the thickness of said hollow body 2, but as the hollow body 2 is tapered and has a conicity, the depth of said channels 5 decreases from said second end 4 provided with an opening to said first closed end 3. Consequently, it can be said that the height of said transverse ribs 6 also decreases towards the tip of the well 1, while the thickness of the material placed between the inner surface 2b of the hollow body 2 and the bottom of the channels 5 remains constant.

Each channel 5 further comprises at least one break 7; in the variant illustrated, each channel 5 comprises four breaks 7 (Fig. 4), i.e., continuous portions of the outer surface 2a of the hollow body 2 in which there is no removal of material.

These continuities of the outer surface 2a of the hollow body 2, thanks to the breaks 7 of the channels 5, in fact design longitudinal ribs in the thickness of said hollow body.

The breaks 7 of each annular channel 5 are arranged offset from the breaks 7 of the preceding annular channel 5 and to the breaks of the following annular channel 5.

This offset causes a helical pattern of said areas of continuity thereby creating longitudinal ribs with a helical pattern 8.

As mentioned above, as the hollow body 2 is tapered and has a conicity, the height of said ribs with a helical pattern 8 decreases towards the tip of the well 1 and hence towards said first closed end 3 of the hollow body 2.

In the variant illustrated, each channel 5 comprises four breaks 7 so as to create four areas of continuity of the outer surface 2a of the well 2 and consequently four ribs with a helical pattern 8, but it is evident that the breaks can be a generic plurality, or even only one for each channel, according to the size of the well, to its diameter, to the distance between the channels and how much the breaks are offset from one another.

## Claims

1. A thermowell (1) comprising a hollow body (2) of substantially truncated cone shape, tapered, which becomes thinner towards the tip, having an outer surface (2a), an inner surface (2b), a first closed end (3) and a second end (4) provided with an opening suitable for inserting a thermometric probe, **characterised in that** said outer surface (2a) of said hollow body (2) comprises a plurality of annular channels (5) arranged parallel to each other so as to create between them a plurality of transverse ribs (6), wherein each channel (5) comprises at least one break (7), and said at least one break (7) of each annular channel (5) is arranged offset from the at least one break (7) of the preceding and following annular channel (5) so as to leave an area of continuity in the outer surface (2a) of the hollow body (2) creating at least one rib with a helical pattern (8).

2. Thermowell (1) according to claim 1, **characterised in that** said channels (5) are formed in the thickness of said hollow body (2).

3. Thermowell (1) according to claim 1, **characterised in that** said channels (5) occupy a portion of said hollow body (2) proximal to said first closed end (3).

4. Thermowell (1) according to claim 1, **characterised in that** the depth of said channels (5) decreases from said second end (4) provided with an opening to said first closed end (3), so as to leave an equal amount of material between the bottom of said channel and the inner surface (2b) of the hollow body (2).

5. Thermowell (1) according to claim 1, **characterised in that** the height of said at least one rib with a helical pattern (8) decreases from said second end (4) provided with an opening to said first closed end (3).

6. Thermowell (1) according to claim 1, **characterised in that** each channel (5) comprises four breaks (7) so as to create four areas of continuity in the outer surface (2a) of the hollow body (2) creating four ribs with a helical pattern (8).

## Patentansprüche

1. Ein Thermometerschutzrohr (1), umfassend einen hohlen Körper (2) in Form eines im Wesentlichen abgestumpften Kegels, der sich zur Spitze hin verjüngt und dünner wird, mit einer Außenfläche (2a), einer Innenfläche (2b), einem ersten geschlossenen Ende (3) und einem zweiten Ende (4), das mit einer zum Einführen einer thermometrischen Sonde geeigneten Öffnung versehen ist, **dadurch gekennzeichnet, dass** die besagte Außenfläche (2a) des besagten Hohlkörpers (2) eine Vielzahl von ringförmigen Kanälen (5) umfasst, die parallel zueinander angeordnet sind, sodass zwischen ihnen eine Vielzahl von Querrippen (6) entsteht, wobei jeder Kanal (5) mindestens eine Unterbrechung (7) umfasst und die besagte mindestens eine Unterbrechung (7) jedes ringförmigen Kanals (5) versetzt zu der mindestens einen Unterbrechung (7) des vorhergehenden und des nachfolgenden ringförmigen Kanals (5) angeordnet ist, um einen durchgehenden Bereich in der Außenfläche (2a) des Hohlkörpers (2) zu belassen, wodurch mindestens eine Rippe mit einem spiralförmigen Muster (8) geschaffen wird.

2. Thermometerschutzrohr (1) gemäß Anspruch 1, **dadurch gekennzeichnet, dass** die besagten Kanäle (5) in der Dicke des besagten Hohlkörpers (2) geformt sind.

3. Thermometerschutzrohr (1) gemäß Anspruch 1, **dadurch gekennzeichnet, dass** die besagten Kanäle (5) einen Abschnitt des besagten Hohlkörpers (2) belegen, der nahe an dem besagten ersten geschlossenen Ende (3) liegt.

4. Thermometerschutzrohr (1) gemäß Anspruch 1, **dadurch gekennzeichnet, dass** die Tiefe der besagten Kanäle (5) vom besagten zweiten, mit einer Öffnung versehenen Ende (4) zu dem besagten ersten, geschlossenen Ende (3) hin abnimmt, sodass eine gleichbleibende Materialstärke zwischen dem Boden des besagten Kanals und der Innenfläche (2b) des Hohlkörpers (2) verbleibt.

5. Thermometerschutzrohr (1) gemäß Anspruch 1, **dadurch gekennzeichnet, dass** die Höhe der besagten mindestens einen Rippe mit spiralförmigem Muster (8) von dem besagten zweiten, mit einer Öffnung versehenen Ende (4) zu dem besagten ersten, geschlossenen Ende (3) hin abnimmt.

6. Thermometerschutzrohr (1) gemäß Anspruch 1, **dadurch gekennzeichnet, dass** jeder Kanal (5) vier Unterbrechungen (7) umfasst, um vier durchgehende Bereiche in der Außenfläche (2a) des Hohlkörpers (2) zu bilden, wodurch vier Rippen mit einem spiralförmigen Muster (8) entstehen.

## Revendications

1. Un doigt de gant (1) comprenant un corps creux (2) de forme substantiellement tronconique, présentant une surface extérieure (2a), une surface intérieure (2b), une première extrémité fermée (3) et une deuxième extrémité (4) pourvue d'une ouverture adaptée à l'insertion d'une sonde thermométrique, **caractérisé par le fait que** ladite surface extérieure (2a) dudit corps creux (2) comporte une multitude de canaux annulaires (5) disposés parallèlement les uns aux autres de manière à créer entre eux une multitude de nervures transversales (6), chaque canal (5) comportant au moins une interruption (7), et ladite au moins une interruption (7) de chaque canal annulaire (5) est disposée en décalage par rapport à la au moins une interruption (7) du canal annulaire (5) précédent et suivant, de manière à laisser une zone de continuité dans la surface extérieure (2a) du corps creux (2), créant ainsi au moins une nervure présentant un motif hélicoïdal (8).

2. Doigt de gant (1) selon la revendication 1, **caractérisé par le fait que** lesdits canaux (5) sont formés dans l'épaisseur dudit corps creux (2).

3. Doigt de gant (1) selon la revendication 1, **caractérisé par le fait que** lesdits canaux (5) occupent une partie dudit corps creux (2) proximale de ladite première extrémité fermée (3).

4. Doigt de gant (1) selon la revendication 1, **caractérisé par le fait que** la profondeur desdits canaux (5) diminue depuis ladite deuxième extrémité (4) pourvue d'une ouverture jusqu'à ladite première extrémité fermée (3), de manière à laisser une quantité égale de matière entre le fond dudit canal et la surface intérieure (2b) du corps creux (2).

5. Doigt de gant (1) selon la revendication 1, **caractérisé par le fait que** la hauteur de ladite au moins une nervure à motif hélicoïdal (8) diminue depuis ladite deuxième extrémité (4) pourvue d'une ouverture jusqu'à ladite première extrémité fermée (3).

6. Doigt de gant (1) selon la revendication 1, **caractérisé par le fait que** chaque canal (5) comporte quatre interruptions (7) de manière à créer quatre zones de continuité dans la surface extérieure (2a) du corps creux (2), formant ainsi quatre nervures à motif hélicoïdal (8).
